# EUROPEAN PATENT SPECIFICATION

(11) **EP 0 742 146 B1**
(45) Date of publication and mention of the grant of the patent: **29.03.2000**
(21) Application number: 95303193.7
(22) Date of filing: 11.05.1995
(51) Int. Cl.: B64G 1/28, G01C 19/16

(54) **Mechanism for mounting and actuating a momentum wheel with high vibration isolation**
Vorrichtung zum Montieren und zur Betätigung von einem Schwungrad mit hoher Schwingungsisolierung
Mécanisme pour monter et actionner une roue d'inertie à haute isolation des vibrations

(43) Date of publication of application: 13.11.1996
(73) Proprietor: Raytheon Company, El Segundo, California 90245 (US)
(72) Inventor: Harrell, John P., Mission Viejo, California 92692 (US)
(74) Representative: Jackson, Richard Eric

(56) References cited:
- EP-A- 0 539 930
- WO-A-93/24763
- FR-A- 1 380 694
- FR-A- 2 535 480
- US-A- 3 264 880
- US-A- 3 817 508
- US-A- 4 242 917
- US-A- 4 270 393
- US-A- 4 537 382

## Description

### BACKGROUND OF THE INVENTION

### 1. Technical Field

This invention broadly relates to an apparatus and method of mounting a momentum wheel assembly of a spacecraft having a displaceable momentum wheel assembly providing spacecraft attitude control and providing high mechanical vibration isolation.

### 2. Discussion

In a spin-stabilized spacecraft, a momentum wheel has an axis of rotation substantially coinciding with the stabilized spin axis of the spacecraft. The momentum wheel spins in a direction opposite the stabilized spin direction of the spacecraft at substantially the same angular momentum. Such a configuration yields a net momentum of zero imparted to the spacecraft by stabilized spin.

In one particular momentum wheel configuration, a momentum wheel is rigidly bolted to the spacecraft so that its spin axis substantially parallels the spin axis of the spacecraft, and the momentum wheel spins in a direction opposite that of the spin direction of the spacecraft at substantially the same angular momentum. In order to slew the spin axis or to point and steer the spacecraft from one direction to another, control thrusters are used to create the starting and stopping forces. When control thrusters are used to point and steer the spacecraft, additional propellant is required which increases the spacecraft weight, requires additional power to control the spacecraft, and results in the spacecraft experiencing additional vibration. In a second type of momentum wheel configuration, a momentum wheel has a nominal spin axis which substantially parallels the spin axis of the spacecraft and spins at an angular momentum to substantially cancel out the angular momentum of the spacecraft. The momentum wheel is mounted on gimbals, rather than rigidly, which enable pivoting about the two axes orthogonal to the primary spin axis of the spacecraft. By pivoting the momentum wheel about the orthogonal axes, the spacecraft may be pointed and steered in accordance with the size and weight of the spacecraft and the degree of pivot about the axes.

In order to control the attitude of a spacecraft having a momentum wheel, torques applied between the spacecraft and the case housing the momentum wheel displace the momentum wheel spin axis from the spacecraft stabilized spin axis, resulting in controlled pointing and steering of the spacecraft. Conventional methods employed to position the momentum wheel assembly generally involve the above described mechanical gimbals which rotate the momentum wheel about two orthogonal axes using bearings or flexures. Positioning occurs when motors or screw actuator linkages provide torques to the momentum wheel assembly. However, these mechanisms provide little mechanical isolation between the spinning momentum wheel assembly and the spacecraft.

While the above-mentioned systems do provide momentum cancellation in the spacecraft, spinning momentum wheels inherently produce vibrational forces over a broad frequency band, degrading the stability of the spacecraft as a pointing platform and/or disturbing sensitive instruments. Accordingly, it desirable to reduce such vibrational forces in order to provide a more stable platform for pointing as well as to protect such sensitive instruments. It is further desirable to provide a momentum wheel assembly which is significantly isolated from the spacecraft in order to reduce vibrations translated from the momentum wheel assembly to the spacecraft.

FR-A-2535480 discloses an apparatus for providing vibration isolation between a momentum wheel assembly and a spacecraft, wherein the momentum wheel is mechanically mounted for pivotal movement around its first and second axes.

### SUMMARY OF THE INVENTION

In accordance with the teachings of the present invention, and as claimed in claim 1 hereinafter, this invention provides an apparatus for mounting a momentum wheel assembly to a spacecraft having a primary spin axis. The momentum wheel assembly is adapted to be mounted to the spacecraft and is pivotable about first and second axes other than the primary spin axis. The apparatus includes a means for pivoting the momentum wheel assembly about the first or the second pivot axes without mechanical contact between the moving and stationary members and further includes suspension isolation for mounting the momentum wheel assembly to the spacecraft. The suspension isolation means provides substantial vibration isolation in 3 degrees of freedom between the spacecraft and the momentum wheel assembly.

Additional objects, features and advantages of the present invention will become apparent from the following description and the appended claims, taken in connection with the accompanying drawings.

### BRIEF DESCRIPTION OF THE DRAWINGS

The various advantages of the present invention will become apparent to one skilled in the art by reading the following specification and by reference to the following drawings in which:
FIG. 1 is a partial cross-sectional view of a spacecraft with an attached momentum wheel assembly in accordance with the principles of the present invention;
FIG. 2 is a cross-sectional top view of the momentum wheel assembly; and
FIG. 3 is a perspective view of the momentum wheel isolation assembly mounted to a portion of the spacecraft.

### DETAILED DESCRIPTION OF THE PREFERRED EMBODIMENTS

The following description of the preferred embodiments is merely exemplary in nature and not intended to limit the invention or its application or uses.

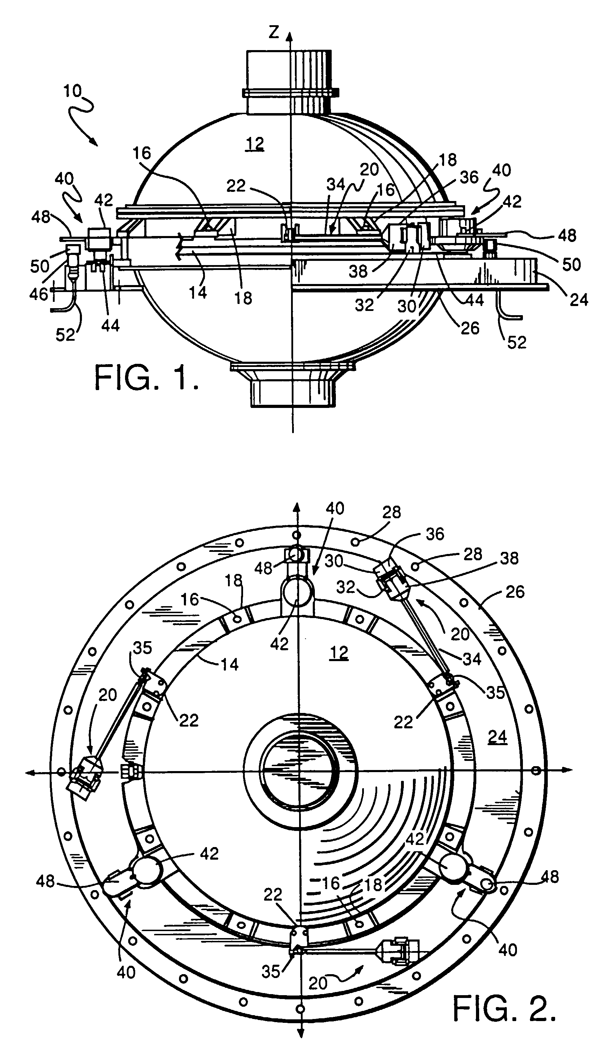

Referring to FIGS. 1 and 2, a momentum wheel assembly 10 is arranged in accordance with the principles of the present invention. A momentum wheel assembly case 12 connects to an adaptor ring 14 via through bolts 16 which pass through case mounts 18, a plurality of which are present on adaptor ring 14. Adaptor ring 14 provides convenient mounting for interconnection between the momentum wheel assembly case 12 and the momentum wheel assembly suspension to be described herein. Adaptor ring 14 and attached momentum wheel assembly case 12 are supported at three points via three isolator strut assemblies 20 which connect to adaptor ring 14 at adaptor ring feet 22 via any of a number of appropriate fastener configurations, but preferably are through bolted to adaptor ring 14. At their other end, isolator strut assemblies 20 connect by any of a number of suitable fastening means to spacecraft mounting ring 24. In the embodiment depicted in FIGS. 1 and 2, isolator strut mounting flanges 32 attach to isolator body 30 so as to enable translational movement and provide damping.

Isolator strut assembly 20 functions similarly to automobile shock absorbers and includes a strut 34 projecting outwardly from cylinder assembly 36 which includes cylinder 38, isolator body 30, and appropriate mounting components such as isolator strut mounting flanges 32. Strut 34 attaches to adaptor ring 14 via threaded engagement with flexure 35. Flexure 35 enables limited radial translation of strut 34 which engage, but inhibit axial motion of the engagement. Cylinder 38 contains a viscous fluid in an enclosed chamber (not shown) and an orifice through which the fluid must pass as strut 34 is compressed or extended. Thus, the isolator strut assembly 20 provides damping of vibrations near the frequency of the natural modes of oscillation of the momentum wheel case suspension. Isolation strut assembly 20 mounts to adaptor ring 14 and spacecraft mounting ring 24 with compliance to rotational motion so that momentum wheel assembly case 12 is free to tilt about the X and Y axes. Thus, isolator strut assemblies 20 provide vibration isolation in those degrees of freedom and provide rotational freedom about the X and Y axes so that torques may be applied between adaptor ring 14 and spacecraft mounting ring 24 to effect spacecraft attitude control, to be explained further herein. Furthermore, the suspension strut assemblies are relatively compliant along the axial direction of the strut 34 to constrain the momentum wheel compliantly in translation in the X-Y plane and in rotation about the Z plane. This characteristic provides vibration isolation in those degrees of freedom.

Momentum wheel assembly case 12 pivots about the X and Y axes in order to displace the momentum wheel rotating within momentum wheel assembly case 12 from the X-Y plane to effect steering and pointing of the spacecraft. Voice coil actuator assemblies 40 generate torques which pivot the momentum wheel assembly case 12 about the X and Y axes. Each voice coil actuator assembly 40 includes a magnet 42 connected to adaptor ring 14 which magnetically communicates with a voice coil 44. Voice coil 44 produces a magnetic field upon the application of an electrical current through wires (not shown) applied in accordance with command signals generated by a controller (not shown). Voice coil 44 mounts to spacecraft mounting ring 24 and is mechanically isolated from momentum wheel assembly case 12. Thus, only magnetic contact exists between voice coil 44 and magnet 42. Also shown in FIG. 1 are position sensors 46 which provide information regarding the displacement of a particular conductive plate 42 from its corresponding sensing coil 44. Each of the position sensors 46 embodied in FIG. 1 is an inductive sensor and electrically communicates with conductive plate 48. Position sensor 46 detects a magnetic field which varies in accordance with the displacement between sensor head 50 and conductive plate 48. A position sensor 46 and associated conductive plate 48 are generally provided with each voice coil assembly 40 so that the tilt of the momentum wheel assembly case 12 (and the associated momentum wheel) about each of the X and Y axes may be determined in accordance with a signal output by each of the position sensors 46. A wire 52 provides electrical input and output signals to one of position sensors 46.

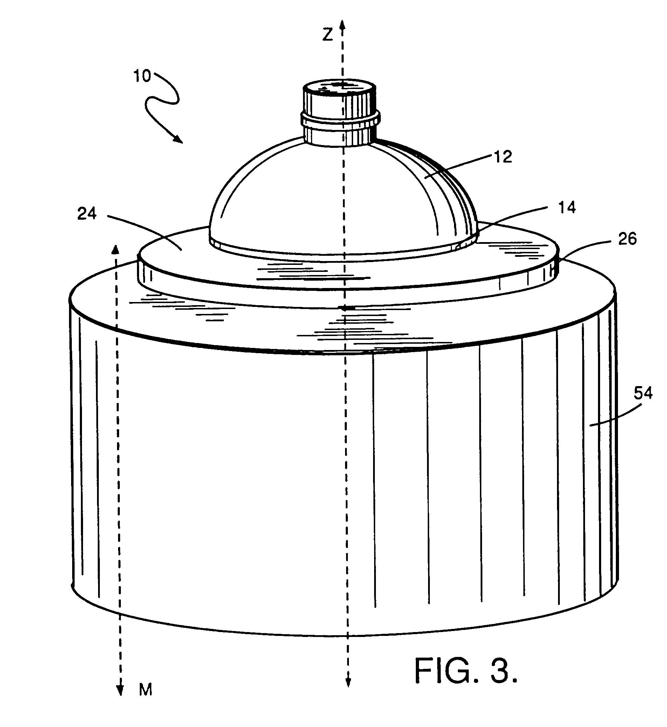

Referring to FIG. 3, in operation, the momentum wheel assembly 10 attaches to spacecraft 54 via spacecraft mounting ring 24 and mounting ring flange 26. The mounting ring 24 is received by the spacecraft via through bolts passing through mounting ring flange 26. The mounting location of the momentum wheel assembly 10 is chosen in accordance with a number of factors, including the balancing of masses about the spin axis of the spacecraft, location of sensitive instrumentation, solar positioning, and space considerations. When mounted, the Z axis of the momentum wheel assembly 10 preferably parallels the spin axis M of spacecraft 54, and the momentum wheel (not shown) lies substantially in the X-Y plane. The momentum wheel assembly case 12 is nominally not pivoted about the X or the Y axes when the spacecraft is in static equilibrium. Because the voice coil actuator assemblies 40 provide translational motion without mechanical contact between the moving and stationary members, no vibrational forces are transmitted from the momentum wheel assembly case 12 via voice coil actuator assemblies 40.

Thus, the only possible path for transmission of vibration to the spacecraft is through isolator strut assemblies 20 which are compliant and damped to effectively limit the forces and moments translated therethrough. By selecting strut compliances accordingly, the suspension may be tuned to as low a natural frequency as possible, thereby achieving maximum isolation within the range of acceptable motion between the momentum wheel and the spacecraft under dynamic conditions. Moreover, because the mechanism is in a weightless environment during operation, a minimum amount of stiffness is required in the suspension to maintain proper nominal orientation. For example, the suspension could be typically tuned to achieve fundamental frequencies between 0.2 and 6 Hz.

It is to be understood that the invention is not limited to the exact construction illustrated and described above, but that various changes and modifications may be made without departing from the scope of the invention as defined in the following claims.

## Claims

1. In a spacecraft (54) having a primary spin axis (M), an apparatus for providing vibration isolation between a momentum wheel assembly (10) and the spacecraft (54), comprising:
a momentum wheel assembly (10) adapted to be mounted to the spacecraft (54) and being pivotable about first (X) and second (Y) axes, the first and second axes being other than parallel to the primary spin axis (M);
means for pivoting (40) the momentum wheel assembly (10) about the first or second pivot axes without mechanical contact between the moving and stationary members; and
suspension isolation means (20) for coupling the momentum wheel assembly (10) to the spacecraft (54) and providing substantial vibration isolation in three degrees of freedom between the spacecraft (54) and the momentum wheel assembly (10) wherein the suspension isolation means (20) is substantially oriented in a plane perpendicular to the primary spin axis (M) of the spacecraft (54).

2. The apparatus as defined in claim 1, wherein the pivoting means further comprises:
a voice coil actuator (44) operatively connected to the spacecraft (54); and
a magnetically conductive member (42) operatively connected to the momentum wheel assembly (10), the magnetically conductive member (42) magnetically communicating with the voice coil actuator (44) such that upon energization of the voice coil actuator (44), a resulting magnetic field provides a magnetic force to displace the momentum wheel assembly (10).

3. The apparatus as defined in claim 2, wherein the voice coil actuator (44) further comprises a plurality of coil actuators (44), and the magnetically conductive member (42) comprises a plurality of magnetically conductive members (42).

4. The apparatus as defined in any preceding claim, further comprising a momentum wheel adaptor ring (14) mounted to the momentum wheel assembly (10).

5. The apparatus as defined in claim 4, wherein the momentum wheel adaptor ring (14) further comprises:
mounting feet (22) receptive to the suspension isolation means (20); and
mounting means (26) receptive to the magnetically conductive members (42).

6. The apparatus as defined in any of claims 2-5, further comprising a mounting flange (26) connected to the spacecraft (54) receptive to the voice coil actuator (44) and mounting means (32) receptive to a second end of the suspension isolation means (34).

## Patentansprüche

1. Vorrichtung zur Bereitstellung einer Vibrationsisolation zwischen einer Drallradeinrichtung (10) und einem Raumschiff (54), das eine Hauptrotationsachse (M) besitzt, umfassend:
eine Drallradeinrichtung (10), die zur Befestigung am Raumschiff (54) geeignet ist und um eine erste (X)- und eine zweite (Y)-Achse verschwenkbar ist, wobei die erste und die zweite Achse nicht parallel zu der Hauptrotationsachse (M) sind;
eine Einrichtung (40) zum Verschwenken der Drallradeinrichtung (10) um die erste oder zweite Schwenkachse ohne mechanischen Kontakt zwischen den beweglichen und stationären Elementen und
eine Aufhängungsisolationseinrichtung (20) zum Koppeln der Drallradeinrichtung (10) an das Raumschiff (54) und zum Bereitstellen von merklicher Vibrationsisolation in drei Freiheitsgraden zwischen dem Raumschiff 54 und der Drallradeinrichtung 10, wobei die Aufhängungsisolationseinrichtung 20 im wesentlichen in einer Ebene orientiert ist, die senkrecht zu der Hauptrotationsachse M des Raumschiffes 54 ist.

2. Vorrichtung nach Anspruch 1, bei der die Schwenkeinrichtung ferner umfaßt:
einen Schwingspulenaktuator (44), der wirkmäßig mit dem Raumschiff (54) verbunden ist und
ein magnetisch leitfähiges Element (42), das wirkmäßig mit der Drallradeinrichtung (10) verbunden ist, wobei das magnetisch leitfähige Element (42) magnetisch mit dem Schwingspulenaktuator (44) derart kommuniziert, daß bei Aktivierung des Schwingspulenaktuators (44) ein resultierendes magnetisches Feld eine magnetische Kraft erzeugt, um die Drallradeinrichtung (10) zu versetzen.

3. Vorrichtung nach Anspruch 2, bei der der Schwingspulenaktuator (44) ferner eine Mehrzahl von Spulenaktuatoren (44) umfaßt und das magnetisch leitfähige Element (42) eine Mehrzahl von magnetisch leitfähigen Elementen (42) aufweist.

4. Vorrichtung nach irgendeinem der vorhergehenden Ansprüche, die ferner einen Drallradadapterring (14) aufweist, der an der Drallradeinrichtung (10) befestigt ist.

5. Vorrichtung nach Anspruch 4, bei der der Drallradadapterring (14) ferner umfaßt:
Befestigungsfüße (42), die an der Aufhängungsisolationseinrichtung (20) aufnehmbar sind; und
Befestigungsmittel (26), die an den magnetisch leitfähigen Elementen (42) aufnehmbar sind.

6. Vorrichtung nach irgendeinem der Ansprüche 2 bis 5, ferner umfassend einen mit dem Raumschiff (54) verbundenen Befestigungsflansch (26), der an dem Schwingspulenaktuator (44) aufnehmbar ist, sowie Befestigungsmittel (32), die an einem zweiten Ende der Aufhängungsisolationseinrichtung (34) aufnehmbar sind.

## Revendications

1. Dans un vaisseau spatial (54) possédant un axe primaire de rotation (M), dispositif pour assurer une isolation des vibrations entre un ensemble de gyroscope stabilisateur (10) et le vaisseau spatial (54), comprenant :
- un ensemble de gyroscope stabilisateur (10) prévu pour être monté sur le vaisseau spatial (54) et pouvant pivoter autour de premier (X) et second (Y) axes, les premier et second axes étant différents d'un axe parallèle à l'axe primaire de rotation (M) ;
- un moyen pour faire pivoter (40) l'ensemble de gyroscope stabilisateur (10) autour du premier ou du second axe de pivotement sans contact mécanique entre les pièces mobiles et les pièces fixes ; et
- des moyens d'isolation de suspension (20) pour coupler l'ensemble de gyroscope stabilisateur (10) au vaisseau spatial (54) et pour assurer une isolation sensible des vibrations dans trois degrés de liberté entre le vaisseau spatial (54) et l'ensemble de gyroscope stabilisateur (10), les moyens d'isolation de suspension (20) étant sensiblement orientés dans un plan perpendiculaire à l'axe primaire de rotation (M) du vaisseau spatial (54).

2. Dispositif selon la revendication 1, dans lequel le moyen de pivotement comprend, de plus :
- un actionneur à bobine mobile (44) connecté, de façon opérationnelle, au vaisseau spatial (54) ; et
- une pièce magnéto-conductrice (42) connectée, de façon opérationnelle, à l'ensemble de gyroscope stabilisateur (10), la pièce magnéto-conductrice (42) communiquant, de façon magnétique, avec l'actionneur à bobine mobile (44) de telle façon que lors de l'excitation de l'actionneur à bobine mobile (44), un champ magnétique résultant crée une force magnétique pour déplacer l'ensemble de gyroscope stabilisateur (10).

3. Dispositif selon la revendication 2, dans lequel l'actionneur à bobine mobile (44) comprend, de plus, une pluralité d'actionneurs à bobine (44) et la pièce magnéto-conductrice (42) comprend une pluralité de pièces magnéto-conductrices (42).

4. Dispositif selon l'une quelconque des revendications précédentes, comprenant, de plus, un adaptateur annulaire de gyroscope stabilisateur (14) monté sur l'ensemble de gyroscope stabilisateur (10).

5. Dispositif selon la revendication 4, dans lequel l'adaptateur annulaire de gyroscope stabilisateur (14) comprend, de plus :
- des bases de montage (22) recevant les moyens d'isolation de suspension (20) ; et
- un moyen de montage (26) recevant les pièces magnéto-conductrices (42).

6. Dispositif selon l'une quelconque des revendications 2 à 5, comprenant, de plus, une bride de montage (26) connectée au vaisseau spatial (54) recevant l'actionneur à bobine mobile (44) et des moyens de montage (32) recevant une seconde extrémité des moyens d'isolation de suspension (34).
